# EUROPÄISCHE PATENTSCHRIFT

(11) **EP 3 942 622 B1**
(45) Veröffentlichungstag und Bekanntmachung des Hinweises auf die Patenterteilung: **08.01.2025**
(21) Anmeldenummer: 20718560.4
(22) Anmeldetag: 20.03.2020
(51) Int. Cl.: H01M 50/204, H01M 50/224, H01M 50/244, H01M 50/276, B60K 1/04

(54) **BATTERIEKASTEN, TRAKTIONSBATTERIE MIT DIESEM BATTERIEKASTEN UND FAHRZEUG MIT DIESER TRAKTIONSBATTERIE**
BATTERY CASE, TRACTION BATTERY AND VEHICLE WITH THIS BATTERY CASE
BOITIER DE BATTERIE, BATTERIE DE TRACTION ET VEHICULE AVEC UN TEL BOITIER DE BATTERIE

(30) Priorität: 22.03.2019 EP 19164734
(43) Veröffentlichungstag der Anmeldung: 26.01.2022
(73) Patentinhaber: voestalpine Metal Forming GmbH, 3500 Krems an der Donau (AT)
(72) Erfinder: LANKSWEIRT, Jochen, 89522 Heidenheim (DE); HASLMAYR, Michael, 4048 Puchenau (AT)
(74) Vertreter: Jell, Friedrich
(86) Internationale Anmeldenummer: PCT/EP2020/057852
(87) Internationale Veröffentlichungsnummer: WO 2020/193426

(56) Entgegenhaltungen:
- CN-A- 108 258 165
- CN-U- 206 598 716
- CN-U- 207 038 568
- CN-U- 207 368 020
- CN-U- 208 093 637
- US-A1- 2017 305 249

## Beschreibung

### Technisches Gebiet

Die Erfindung betrifft einen Batteriekasten für eine Traktionsbatterie, mit einem Gehäuseunterteil, das Gehäuseseitenwände und einen Gehäuseboden aufweist, mit einem Gehäusedeckel, der das Gehäuseunterteil dicht verschließbar und von diesem lösbar ausgebildet ist, mit einer Versteifungsstruktur mit Versteifungsprofilen, wobei die Versteifungsstruktur zwischen Gehäuseboden und Gehäusedeckel vorgesehenen und mit dem Gehäusedeckel unlösbar verbunden ist.

### Stand der Technik

Aufgrund einer vergleichsweise bodennahen Einbauposition von Batteriekästen für Traktionsbatterien bedarf es im Falle eines Crashs eines erhöhten Schutzes der von den Batteriekästen aufgekommenen Batteriemodule. Beispielsweise ist aus der DE102017105709A1 ein Batteriekasten bekannt, an dessen Gehäusedeckel eine Versteifungsstruktur aus Versteifungsprofilen unlösbar angebunden ist. Diese Versteifungsstruktur ist zwischen Gehäusedeckel und dem Gehäuseboden des Gehäuseunterteils bzw. einer am Gehäuseunterteil befestigten Tragstruktur vorgesehen - und dazu ausgebildet, crashbedingte Seitenkräfte aufzunehmen. Überraschend hat sich herausgestellt, dass die erreichbaren Eigenschaften im Crashverhalten aufgrund des versteiften Gehäusedeckels von der Anbindung der Versteifungsprofile am Gehäusedeckel abhängen.

Ein Stand der Technik in Anlehnung an den Oberbegriff des Anspruchs 1 ist in der CN208093637U und CN108258165A bekannt.

### Darstellung der Erfindung

Die Erfindung hat sich daher die Aufgabe gestellt, bei vergleichswiese geringem Gewicht am Batteriekasten dessen Crashverhalten weiter zu verbessern.

Die Erfindung löst die gestellte Aufgabe dadurch, durch die Merkmale des Anspruchs 1.

Sind die Versteifungsprofile mit dem Gehäusedeckel stoffschlüssig verbunden, kann ein mechanische besonders belastbarer Gehäusedeckel geschaffen werden, um im Falle eines Crashs Verformungskräfte verbessert aufzunehmen - und damit die vom Batteriekasten aufgenommen Batteriemodule zu schützen. Im Gegensatz zu anderen Arten der unlösbaren Anbindung, beispielsweise Stauch-Press-Verbindungen, bleibt damit das Gewicht des Batteriekastens gering. Der erfindungsgemäße Batteriekastens kann sich daher bei geringem Gewicht durch ein verbessertes Crashverhalten gegenüber bekannten Batteriekästen auszeichnen.

Das Crashverhalten bei geringem Gewicht am Batteriekasten ist weiter verbesserbar, wenn die Versteifungsprofile jeweils zusammen mit dem Gehäusedeckel geschlossene erste Hohlprofile ausbilden. Dies ist vor allem auch durch die erfindungsgemäßen geschlossenen Hohlprofile, ausgebildet von den jeweiligen Versteifungsprofilen zusammen mit dem Gehäusedeckel, und der sich daraus ergebenden vergleichsweise hohen mechanischen Steifigkeit erreichbar. Dies kann zu einem mechanisch besonders belastbaren Gehäusedeckel führen, um im Falle eines Crashs Verformungskräfte verbessert aufzunehmen - damit die vom Batteriekasten aufgenommen Batteriemodule geschützt werden. Zudem ist diese konstruktive Ausbildung der Hohlprofile durch stoffschlüssig verbundene Teile, nämlich Versteifungsprofile und Gehäusedeckel, vergleichsweise materialsparend ausgeführt - was wiederum das Gewicht des mechanisch besonders belastbaren Gehäusedeckels und in weiterer Folge auch des Batteriekastens geringhält.

Der unlösbare Verbund zwischen Gehäusedeckel und Hohlprofilen kann in seiner Festigkeit auf einfache Weise erhöht werden, wenn die Versteifungsprofile mit dem Gehäusedeckel über eine diskontinuierliche Schweißverbindung, beispielsweise in Form von Schweißpunkten, stoffschlüssig verbunden sind.

Eine weitere Steigerung der mechanischen Kennwerte am Batteriekasten ist erreichbar, wenn mindestens ein erstes Hohlprofil eine Sicke im Gehäusedeckel aufweist. Vorzugsweise läuft die Sicke geschlossen und/oder gerade - was die Herstellung des Gehäusedeckels bei dem genannten Vorteil weiter erleichtern kann. Die Sicke ist vorzugsweise nach innen gerichtet.

Weisen die Versteifungsprofile eine Hutprofilform auf, deren jeweilige Schenkel mit dem Gehäusedeckel stoffschlüssig verbunden sind, kann die Herstellung vereinfacht werden - womit die Kosten für ein rechteckiges Hohlprofil noch weiter reduzierbar sind.

Vorzugsweise verlaufen die Versteifungsprofile zueinander parallel, um durch derartige symmetrischere Verhältnisse die mechanische Belastbarkeit über den Gehäusedeckel zu vergleichmäßigen.

Eine besonders belastbare Versteifung des Gehäusedeckels kann erreicht werden, wenn die Versteifungsprofile parallel zu einer jeweiligen Seitenwand des Gehäuseunterteils verlaufen. Derart ist die mechanische Belastbarkeit des Gehäusedeckels weiter zu erhöhen.

Die Steifigkeit des Batteriekasten kann weiter erhöht werden, wenn der Batteriekasten eine Tragstruktur zur Montage von Batteriemodulen der Traktionsbatterie aufweist, wobei die Tragstruktur am Gehäuseunterteil befestigt ist.

Vorzugsweise sind Versteifungsprofile direkt über, insbesondere über Längs- oder Querträger, der Tragstruktur vorgesehen, um beispielswiese im Bereich der Montagepunkte der Batteriemodule den Batteriekasten zusätzlich zur Tragstruktur zu versteifen. Dies kann den Schutz der Batteriemodule vor Beschädigungen im Falle eines Crashs zusätzlich verbessern.

Ist mindestens ein Versteifungsprofil zum Klemmen eines auf der Tragstruktur aufliegenden Montageflanschs eines Batteriemoduls ausgebildet, kann die Versteifungsstruktur auch zur sicheren Halterung der Batteriemodule beitragen. Dies kann die Standfestigkeit der Traktionsbatterie weiter verbessern.

Weist das Gehäuseunterteil einen umlaufenden Flansch auf, auf dem der Gehäusedeckel aufliegt, kann ein besonders verwindungssteifes Gehäuse zur Verfügung gestellt werden, welches zudem die aufgenommenen Batteriemodule auf einfache und sichere Weise dicht abschließen kann.

Die Verwindungssteifigkeit des Batteriekastens ist weiter erhöhbar, wenn der Gehäusedeckel im Bereich des Flansches außenliegend ein geschlossenes zweites Hohlprofil aufweist.

Die Versteifungsprofile ragen zumindest bereichsweise in den Gehäuseunterteil ein, was zur weiteren Versteifung des Batteriekastens beiträgt. Die mechanischen Anforderungen an die Tragstruktur im Gehäuseunterteil können damit verringert werden - was einer Montagefreiheit förderlich sein kann.

Vorzugsweise erstrecken sich die Versteifungsprofile außerhalb des Gehäuseunterteils, um beispielsweise bei crashbedingten Deformationen am Gehäusedeckel eine Beschädigung der vom Gehäuseunterteils aufgenommenen Batteriemodule zu vermeiden.

Die genannten Vorteile sind besonders bei einem Fahrzeug realisierbar, welches einen erfindungsgemäßen Batteriekasten aufweist welcher unterhalb des Karosseriebodens angeordnet ist.

### Kurze Beschreibung der Zeichnungen

In den Figuren ist beispielsweise der Erfindungsgegenstand anhand mehrere Ausführungsvarianten näher dargestellt. Es zeigen
- Fig. 1: eine aufgerissene Seitenansicht eines Batteriekastens,
- Fig. 2: eine Schnittansicht nach II-II des nach Fig. 1 dargestellten Batteriekastens,
- Fig. 3: eine aufgerissene Seitenansicht auf einen teilweise dargestellten Batteriekasten nach einem zweiten Ausführungsbeispiel und
- Fig. 4: eine Draufsicht auf den teilweise dargestellten Gehäuseunterteil des Batteriekastens nach Fig. 3.

### Weg zur Ausführung der Erfindung

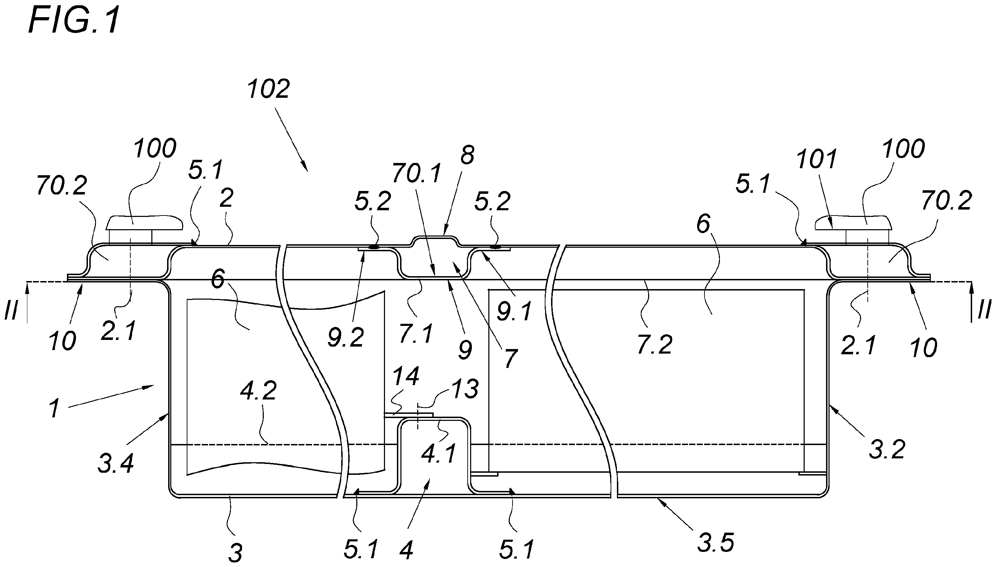

Nach Fig. 1 wird beispielsweise ein Batteriekasten 1 für eine Traktionsbatterie 102 eines Fahrzeugs 100 gezeigt.

Der Batteriekasten 1 weist einen Gehäusedeckel 2 und ein wannenförmiges Gehäuseunterteil 3 auf - Gehäusedeckel 2 und Gehäuseunterteil 3 werden aus einem umgeformten Blech, beispielsweise Stahlblech, hergestellt. Es ist vorstellbar, das Blech durch Tiefziehen umzuformen, um Gehäusedeckel 2 und/oder Gehäuseunterteil 2 umzuformen. Ebenso ist vorstellbar, hierfür das Blech durch Falten umzuformen, um den Gehäuseunterteil 2 und/oder den Gehäusedeckel 2 in Form zu bringen.

Der Gehäusedeckel 2 verschließt das Gehäuseunterteil 3 dicht, ist mit diesem Gehäuseunterteil 3 jedoch - über angedeutet dargestellte erste Schraubverbindungen 2.1 - lösbar verbunden.

Im Gehäuseunterteil 3 ist eine mit diesem fest verbundene, nämlich über eine kontinuierliche Schweißverbindung 5.1, nämlich Schweißnaht, unlösbar verbundene, Tragstruktur 4 aus miteinander fest verbundenen Längs- und Querträgern 4.1, 4.2 vorgesehen. Die am Gehäuseunterteil 3 befestigte Tragstruktur 4 versteift das Gehäuseunterteil 3 und dient auch der Befestigung von Batteriemodulen 6 der Traktionsbatterie 102 im Batteriekasten 1.

Zudem weist der Batteriekasten 1 eine Versteifungsstruktur 7 mit Versteifungsprofilen 7.1, 7.2 auf. Diese Versteifungsstruktur 7 ist zwischen Tragstruktur 4 und Gehäusedeckel 2 vorgesehenen und mit dem Gehäusedeckel 2 unlösbar über eine kontinuierliche Schweißverbindung 5.1, nämlich Schweißnaht, verbunden.

Die Batteriemodule 6 -bzw. auch Zellmodule genannt- weisen vorzugsweise Lithium-Ionen-Zellen auf. Bekanntermaßen wird unter einem Batteriemodul 6 ein zusammengeschaltetes Paket aus mehreren Batteriezellen verstanden, welche Batteriezellen von einem, vorzugsweise geschlossenen, Gehäuse umgeben sind.

Erfindungsgemäß sind die Versteifungsprofile 7.1, 7.2 mit dem Gehäusedeckel 2 über eine Schweißverbindung 5.2 stoffschlüssig verbunden, was die Steifigkeit des Gehäusedeckels 2 erheblich erhöht. Dies umso mehr, da die Versteifungsprofile 7.1, 7.2 zusammen mit dem Gehäusedeckel 2 geschlossene erste Hohlprofile 70.1 ausbilden - was einen besonderen vorteilhaften Einfluss auf die Verwindungssteifigkeit des Gehäusedeckels 2 hat, um einem vergleichsweise hohen crashbedingten Krafteintrag widerstehen zu können. Der Batteriekasten 1 kann daher die aufgenommenen Batteriemodule 6 besonders gut vor Beschädigungen schützen.

Vorzugsweise verlaufen die Versteifungsprofile 7.1, 7.2 längs und quer des Batteriekastens 1.

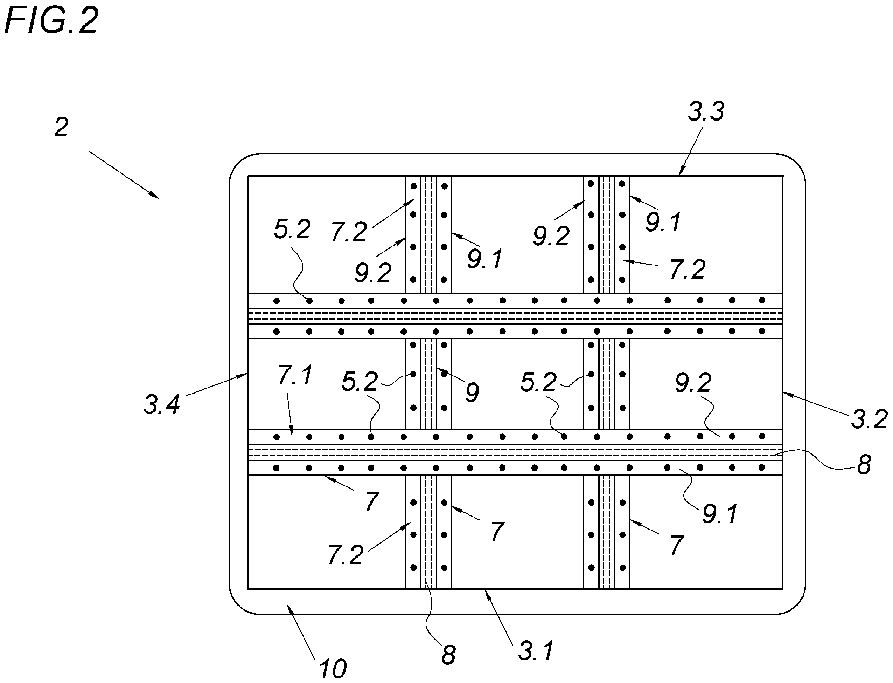

Die Herstellung des Gehäusedeckels 2 wird vereinfacht, indem die Versteifungsprofile 7.1, 7.2 mit dem Gehäusedeckel 2 über eine diskontinuierliche Schweißverbindung 5.2 in Form von in Reihe und voneinander beabstandeten Schweißpunkten stoffschlüssig verbunden sind - was insbesondere in der Fig. 2 zu erkennen ist.

Alternativ zur Schweißverbindung 5.2 ist eine, vorzugsweise diskontinuierliche, Klebstoffverbindung vorstellbar.

Wie zudem in den Figuren 1 und 2 erkennbar, weist ein erstes Hohlprofil eine geschlossene, gerade und nach außen gewölbte Sicke 8 im Gehäusedeckel 2 auf. Diese Sicke 8 wirkt versteifend auf den Gehäusedeckel 2 und erhöht zusätzlich die Beulsteifigkeit des Hohlprofils 70.1.

Die Versteifungsprofile 7.1, 7.2 weisen eine Hutprofilform 9 auf. Über die beiden Schenkel 9.1, 9.2 an der Hutprofilform 9 ist das Versteifungsprofil 7.1, 7.2 mit dem Gehäusedeckel 2 stoffschlüssig verbunden - was die Herstellung der Versteifungsstruktur 7 erleichtert und damit die Herstellungskosten des Batteriekastens 1 reduziert.

Die Versteifungsprofile 7.1 bzw. 7.2 verlaufen parallel zur jeweiligen Seitenwand 3.1, 3.3 bzw. 3.2, 3.4 des Gehäuseunterteils 3 - wie in Fig. 2 erkennbar. Zudem sind diese Versteifungsprofile 7.1 bzw. 7.2 über den Längs- bzw. Querträgern 4.1, 4.2 der Tragstruktur 4 vorgesehen - siehe hierzu Fig. 1, in welcher dargestellt ist, dass die Versteifungsprofile 7.1, 7.2 vom Boden des Gehäuseunterteils 3 Richtung Gehäusedeckel 2 direkt über den Längs- und Querträgern 4.1, 4.2, also nicht seitlich versetzt, angeordnet sind. Auf diese Weise werden die Zwischenräume zwischen den Batteriemodulen 6 gezielt genutzt, um den Batteriekasten 1 mechanisch zu versteifen.

Das Gehäuseunterteil 3 weist zudem einen umlaufenden Flansch 10 auf, auf welchem der Gehäusedeckel aufliegt. In diesem Bereich, nämlich im Bereich des Flansches 10, weist der Gehäusedeckel 2 außenliegend ein geschlossenes zweites Hohlprofil 70.2 auf, was den Batteriekasten 1 besonders standfest gegenüber Crashbelastungen macht.

Zudem ist in der Fig. 1 zu erkennen, dass sich die Versteifungsprofile außerhalb des Gehäuseunterteils 3 befinden - das erste Hohlprofil 70.1 also oberhalb der Gehäuseseitenwand 3.1 bis 3.4 angeordnet ist. Bei crashbedingter Deformation des Gehäusedeckels 2 ist daher die Gefahr einer Beschädigung der Batteriemodule 6 verringert.

Der Batteriekasten 1 ist zudem unterhalb des Karosseriebodens 101 eines Fahrzeugs 100 angeordnet, wie in Fig. 1 angedeutet.

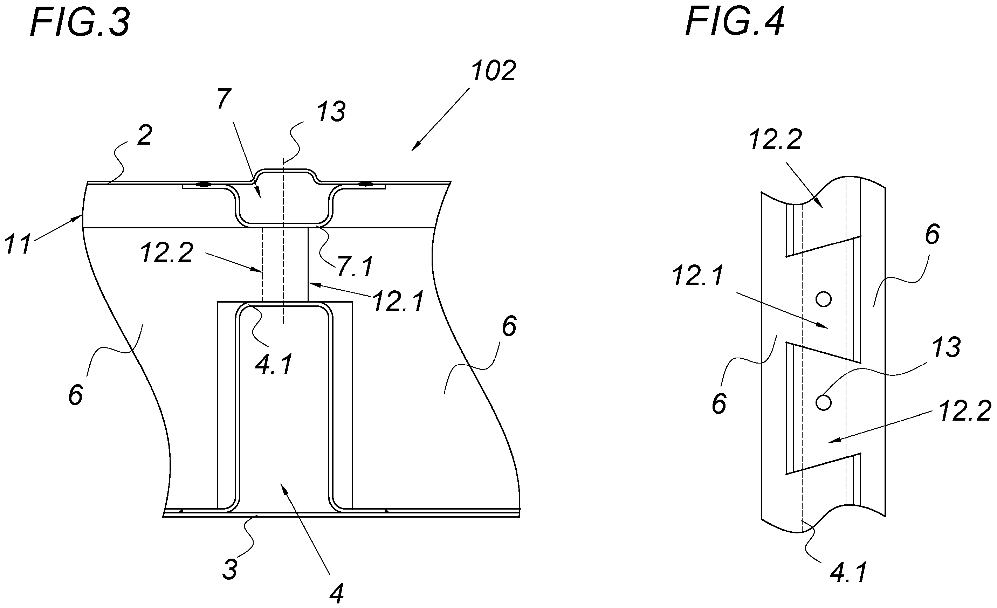

Nach Fig. 3 und 4 wird ein Batteriekasten 11 teilweise dargestellt, der sich vom Batteriekasten 1 der Figur 2 dahingehend unterscheidet, dass die Batteriemodule 6 mit ihren seitlichen Montageflanschen 12.1, 12.2, die auf dem Längsträger 4.1 des Gehäuseunterteils 3 aufliegen, von dem Versteifungsprofil 7.1 niedergehalten werden. Dies sichert die Batteriemodule 6 im Batteriekasten 1 und kann, das Vorsehen der, in Fig. 2 dargestellten Schraubverbindungen 13 zwischen den einzelnen Flanschen 14 und den Längsträger 4.2 vermeiden. Dies insbesondere dadurch, dass das Versteifungsprofil 7.1, 7.2 zum Klemmen des auf der Tragstruktur 4 aufliegenden Montageflansches 12.1, 12.2 eines Batteriemoduls 6 ausgebildet ist. Der Montageaufwand an der Traktionsbatterie 102 ist dadurch erheblich vermindert.

Zudem können damit -wie in Fig. 3 und 4 zu erkennen- Schraubverbindungen 13 den Deckel 6, die Batteriemodule 6 und den Gehäuseunterteil 3 lösbar miteinander verbinden, was die Montagesicherheit weiter erhöht.

Die Montageflansche 12.1, 12.2 der Batteriemodule 6 weisen eine Schwalbenschwanzform auf. Dies sichert die Batteriemodule 6 zusätzlich in der Montageposition und eröffnet auch aufgrund einer ineinandergreifenden Ausführung eine breite Auflagefläche für das Versteifungsprofil 7.1, was zur Verbesserung der mechanischen Stabilität beiträgt.

## Patentansprüche

1. Batteriekasten für eine Traktionsbatterie (102), mit einem Gehäuseunterteil (3), das Gehäuseseitenwände (3.1, 3.2, 3.3, 3.4) und einen Gehäuseboden (2.5) aufweist, mit einem Gehäusedeckel (2), der das Gehäuseunterteil (3.5) dicht verschließbar und von diesem lösbar ausgebildet ist, mit einer Versteifungsstruktur (7) mit Versteifungsprofilen (7.1, 7.2), wobei die Versteifungsstruktur (7) zwischen Gehäuseboden (2.5) und Gehäusedeckel (2) vorgesehenen und mit dem Gehäusedeckel (2) unlösbar verbunden ist, wobei die Versteifungsprofile (7.1, 7.2) mit dem Gehäusedeckel (2) stoffschlüssig verbunden sind, **dadurch gekennzeichnet, dass** die Versteifungsprofile (7.1, 7.2) jeweils zusammen mit dem Gehäusedeckel (2) geschlossene erste Hohlprofile (70.1) ausbilden.

2. Batteriekasten nach Anspruch 1, **dadurch gekennzeichnet, dass** die Versteifungsprofile (7.1, 7.2) mit dem Gehäusedeckel (2) über eine, insbesondere diskontinuierliche, Schweißverbindung (5.2), insbesondere Schweißpunkte, stoffschlüssig verbunden sind.

3. Batteriekasten nach einem der Ansprüche 1 bis 2, **dadurch gekennzeichnet, dass** mindestens ein erstes Hohlprofil (70.1) eine, insbesondere geschlossene und/oder gerade verlaufende, Sicke (8) im Gehäusedeckel (2) aufweist.

4. Batteriekasten nach einem der Ansprüche 1 bis 3, **dadurch gekennzeichnet, dass** die Versteifungsprofile (7.1, 7.2) eine Hutprofilform aufweisen, deren jeweilige Schenkel (9.1, 9.2) mit dem Gehäusedeckel (2) stoffschlüssig verbunden sind.

5. Batteriekasten nach einem der Ansprüche 1 bis 4, **dadurch gekennzeichnet, dass** die Versteifungsprofile (7.1, 7.2) zueinander parallel verlaufen.

6. Batteriekasten nach einem der Ansprüche 1 bis 5, **dadurch gekennzeichnet, dass** Versteifungsprofile (7.1 bzw. 7.2) parallel zur einer Seitenwand (3.1, 3.3 bzw. 3.2, 3.4) des Gehäuseunterteils (3) verlaufen.

7. Batteriekasten nach einem der Ansprüche 1 bis 6, **dadurch gekennzeichnet, dass** der Batteriekasten (1) eine Tragstruktur (4) zur Montage von Batteriemodulen (6) der Traktionsbatterie (102) aufweist, wobei die Tragstruktur (4) am Gehäuseunterteil (3) befestigt ist.

8. Batteriekasten nach Anspruch 7, **dadurch gekennzeichnet, dass** Versteifungsprofile (7.1, 7.2) direkt über, insbesondere über Längs- und/oder Querträger (4.1, 4.2), der Tragstruktur (4) vorgesehen sind.

9. Batteriekasten nach Anspruch 7 oder 8, **dadurch gekennzeichnet, dass** mindesten ein Versteifungsprofil (7.1, 7.2) zum Klemmen eines auf der Tragstruktur (4) aufliegenden Montageflansches (12.1, 12.2) eines Batteriemoduls (6) ausgebildet ist.

10. Batteriekasten nach einem der Ansprüche 1 bis 9, **dadurch gekennzeichnet, dass** das Gehäuseunterteil (3) einen umlaufenden Flansch (10) aufweist, auf dem der Gehäusedeckel (2) aufliegt.

11. Batteriekasten nach Anspruch 10, **dadurch gekennzeichnet, dass** der Gehäusedeckel (2) im Bereich des Flansches (10) außenliegend ein geschlossenes zweites Hohlprofil (70.2) aufweist.

12. Batteriekasten nach einem der Ansprüche 1 bis 11, **dadurch gekennzeichnet, dass** die Versteifungsprofile (7.1, 7.2) zumindest bereichsweise in den Gehäuseunterteil (3) einragen oder dass sich die Versteifungsprofile (7.1, 7.2) außerhalb des Gehäuseunterteils (3) erstrecken.

13. Traktionsbatterie mit einem Batteriekasten (1) nach einem der Ansprüche 1 bis 12.

14. Fahrzeug mit einem Karosserieboden (101) und mit einem Batteriekasten (1) nach einem der Ansprüche 1 bis 12, **dadurch gekennzeichnet, dass** der Batteriekasten (1) unterhalb des Karosseriebodens (101) angeordnet ist.

## Claims

1. Battery case for a traction battery (102), having a lower housing part (3) which has housing side walls (3.1, 3.2, 3.3, 3.4) and a housing bottom (2.5), having a housing lid (2) which can close the lower housing part (3.5) tightly and is designed to be detachable therefrom, having a stiffening structure (7) with stiffening profiles (7.1, 7. 2), wherein the stiffening structure (7) is provided between the housing bottom (2.5) and the housing lid (2) and is non-detachably connected to the housing lid (2), wherein the stiffening profiles (7.1, 7.2) are connected to the housing lid (2) with a material bond, **characterized in that** the stiffening profiles (7.1, 7.2) each form closed first hollow profiles (70.1) together with the housing lid (2).

2. Battery case according to claim 1, **characterized in that** the stiffening profiles (7.1, 7.2) are connected to the housing lid (2) in a materially bonded manner via a, more particularly discontinuous, welded connection (5.2), more particularly spot welds.

3. Battery case according to one of claims 1 to 2, **characterized in that** at least one first hollow profile (70.1) has a bead (8), more particularly a closed and/or straight bead, in the housing lid (2).

4. Battery case according to one of claims 1 to 3, **characterized in that** the stiffening profiles (7.1, 7.2) have a hat profile shape, the respective legs (9.1, 9.2) of which are connected to the housing lid (2) in a materially bonded manner.

5. Battery case according to one of claims 1 to 4, **characterized in that** the stiffening profiles (7.1, 7.2) run parallel to one another.

6. Battery case according to one of claims 1 to 5, **characterized in that** stiffening profiles (7.1 or 7.2) run parallel to a side wall (3.1, 3.3 or 3.2, 3.4) of the lower housing part (3).

7. Battery case according to one of claims 1 to 6, **characterized in that** the battery case (1) has a support structure (4) for mounting battery modules (6) of the traction battery (102), wherein the support structure (4) is fastened to the lower housing part (3).

8. Battery case according to claim 7, **characterized in that** stiffening profiles (7.1, 7.2) are provided directly above the support structure (4), more particularly above longitudinal and/or transverse beams (4.1, 4.2).

9. Battery case according to claim 7 or 8, **characterized in that** at least one stiffening profile (7.1, 7.2) is designed for clamping a mounting flange (12.1, 12.2) of a battery module (6) resting on the support structure (4).

10. Battery case according to one of claims 1 to 9, **characterized in that** the lower housing part (3) has a flange (10) running around it, on which the housing lid (2) rests.

11. Battery case according to claim 10, **characterized in that** the housing lid (2) has a closed second hollow profile (70.2) on the outside in the region of the flange (10).

12. Battery case according to one of claims 1 to 11, **characterized in that** the stiffening profiles (7.1, 7.2) project into the lower housing part (3) at least in some areas or **in that** the stiffening profiles (7.1, 7.2) extend outside the lower housing part (3).

13. Traction battery having a battery case (1) according to one of claims 1 to 12.

14. Vehicle having a body floor (101) and having a battery case (1) according to one of claims 1 to 12, **characterized in that** the battery case (1) is arranged below the body floor (101)

## Revendications

1. Coffre de batterie pour une batterie de traction (102), avec une partie inférieure de boîtier (3) comportant des parois latérales de boîtier (3.1, 3.2, 3.3, 3.4) et un fond de boîtier (2.5), avec un couvercle de boîtier (2) conçu pour fermer la partie inférieure de boîtier (3.5) de manière étanche et pour pouvoir être séparé de celle-ci, avec une structure raidisseuse (7) munie de profilés raidisseurs (7.1, 7.2), laquelle structure raidisseuse (7) est prévue entre le fond de boîtier (2.5) et le couvercle de boîtier (2) et reliée de façon amovible au couvercle de boîtier (2), les profilés raidisseurs (7.1, 7.2) étant reliés au couvercle de boîtier (2) par solidarité de matière, **caractérisé en ce que** les profilés raidisseurs (7.1, 7.2) forment chacun avec le couvercle de boîtier (2) des premiers profilés creux fermés (70.1).

2. Coffre de batterie selon la revendication 1, **caractérisé en ce que** les profilés raidisseurs (7.1, 7.2) sont reliés au couvercle de boîtier (2) par solidarité de matière par une soudure (5.2), en particulier discontinue, en particulier par des points de soudure.

3. Coffre de batterie selon l'une des revendications 1 à 2, **caractérisé en ce que** l'au moins un premier profilé creux (70.1) comporte une moulure (8), en particulier fermée et/ou droite, dans le couvercle de boîtier (2).

4. Coffre de batterie selon l'une des revendications 1 à 3, **caractérisé en ce que** les profilés raidisseurs (7.1, 7.2) ont une forme de profilé oméga dont chaque bras (9.1, 9.2) est relié au couvercle de boîtier (2) par solidarité de matière.

5. Coffre de batterie selon l'une des revendications 1 à 4, **caractérisé en ce que** les profilés raidisseurs (7.1, 7.2) sont parallèles les uns aux autres.

6. Coffre de batterie selon l'une des revendications 1 à 5, **caractérisé en ce que** des profilés raidisseurs (7.1 ou 7.2) sont parallèles à une paroi latérale (3.1, 3.3 ou 3.2, 3.4) de la partie inférieure de boîtier (3).

7. Coffre de batterie selon l'une des revendications 1 à 6, **caractérisé en ce que** le coffre de batterie (1) comporte une structure portante (4) pour le montage de modules de batterie (6) de la batterie de traction (102), laquelle structure portante (4) est fixée sur la partie inférieure de boîtier (3).

8. Coffre de batterie selon la revendication 7, **caractérisé en ce que** des profilés raidisseurs (7.1, 7.2) sont prévus directement au-dessus de la structure portante (4), en particulier au-dessus de longerons et/ou de traverses (4.1, 4.2).

9. Coffre de batterie selon la revendication 7 ou 8, **caractérisé en ce qu'**au moins un profilé raidisseur (7.1, 7.2) est conformé pour serrer une bride de montage (12.1, 12.2) d'un module de batterie (6) reposant sur la structure portante (4).

10. Coffre de batterie selon l'une des revendications 1 à 9, **caractérisé en ce que** la partie inférieure de boîtier (3) comporte une bride circonférentielle (10) sur laquelle repose le couvercle de boîtier (2).

11. Coffre de batterie selon la revendication 10, **caractérisé en ce que** le couvercle de boîtier (2) présente un deuxième profilé creux fermé (70.2) reposant sur l'extérieur dans la zone de la bride (10).

12. Coffre de batterie selon l'une des revendications 1 à 11, **caractérisé en ce que** les profilés raidisseurs (7.1, 7.2) dépassent au moins par zones dans la partie inférieure de boîtier (3) ou **en ce que** les profilés raidisseurs (7.1, 7.2) s'étendent à l'extérieur de la partie inférieure de boîtier (3).

13. Batterie de traction avec un coffre de batterie (1) selon l'une des revendications 1 à 12.

14. Véhicule avec un plancher de carrosserie (101) et avec un coffre de batterie (1) selon l'une des revendications 1 à 12, **caractérisé en ce que** le coffre de batterie (1) est disposé sous le plancher de carrosserie (101).
